# FASCICULE DE BREVET EUROPEEN

(11) **EP 0 657 396 B1**
(45) Date de publication et mention de la délivrance du brevet: **07.07.1999**
(21) Numéro de dépôt: 94402797.8
(22) Date de dépôt: 06.12.1994
(51) Int. Cl.: C03C 25/02

(54) **Procédé de fabrication de fils de verre ensimés et fils de verre en résultant**
Verfahren zur Herstellung von beschichteten Glasfasern und dadurch hergestellte Glasfasern
Process for the production of sized glass fibers and thus produced glass fibers

(30) Priorité: 09.12.1993 FR 9314795
(43) Date de publication de la demande: 14.06.1995
(73) Titulaire: VETROTEX FRANCE, 73000 Chambéry (FR)
(72) Inventeur: Moireau, Patrick, F-73190 Curienne (FR); Johnson, Timothy, F-73160 Vimines (FR)
(74) Mandataire: Breton, Jean-Claude

(56) Documents cités:
- EP-A- 0 001 286
- EP-A- 0 243 275
- EP-A- 0 570 283
- US-A- 5 055 119
- PATENT ABSTRACTS OF JAPAN vol. 14, no. 446 (C-763) 25 Septembre 1990 & JP-A-02 175 634 (SUMITOMO ELECTRIC IND. LTD.) 6 Juillet 1990
- CHEMICAL ABSTRACTS, vol. 115, no. 8, 26 Août 1991, Columbus, Ohio, US; abstract no. 77199x, page 350 ; & CA-A-2 024 379 (DESOTO INC.) 2 Mars 1991
- CHEMICAL ABSTRACTS, vol. 101, no. 12, 17 Septembre 1984, Columbus, Ohio, US; abstract no. 96444a, page 331 ; & JP-A-5 950 053 (NIPPON VALQUA INDUSTRIES LTD.) 22 Mars 1984

## Description

La présente invention concerne la fabrication de fils de verre obtenus par étirage mécanique et destinés notamment à renforcer des matières organiques thermoplastiques ou thermodurcissables ou des mélanges à base de ciment.

Les fils de verre continus sont obtenus en étirant mécaniquement une multiplicité de filets de verre fondu et s'écoulant des orifices disposés à la base d'une filière, sous la forme de filaments continus. Ces filaments, répartis en une ou plusieurs nappes séparées, sont revêtus en cours d'étirage d'un ensimage par un dispositif approprié avant d'être rassemblés pour donner naissance à un ou plusieurs fils. Cet ensimage qui va conférer différentes caractéristiques au fil de verre doit tout d'abord posséder des propriétés imposées par le procédé de fabrication desdits fils de verre. Il doit en particulier être stable et conserver une composition constante, malgré les forces de cisaillement provoquées en permanence au sein dudit ensimage par les filaments qui le traversent à des vitesses de l'ordre de plusieurs dizaines de mètres par seconde.

Cet ensimage doit ensuite protéger les filaments de l'abrasion provoquée par le frottement inévitable du fil sur différentes surfaces. Généralement il doit aussi assurer l'intégrité du fil, c'est-à-dire, la liaison des filaments qui le constituent entre eux. Cette caractéristique est importante car elle permet non seulement d'extraire facilement un fil d'un enroulement (présentation très courante des fils de verre) mais elle limite aussi le nombre de filaments qui frottent directement sur tous les dispositifs de guidage du fil. Lorsque le fil est destiné à renforcer une matière organique, l'ensimage doit également faciliter le mouillage des filaments qui le constituent par ladite matière.

Enfin, lorsque le fil de verre est destiné à renforcer des matières organiques, l'ensimage déposé sur les filaments doit être compatible chimiquement avec lesdites matières.

La quasi totalité des ensimages connus sont des ensimages en phase aqueuse qui se présentent sous la forme de solutions ou, beaucoup plus souvent, sous la forme de suspension ou d'émulsions dans l'eau.

Préalablement à leur association avec une matière organique, les fils de verre ainsi ensimés doivent être séchés pour éliminer l'eau qui devient inutile voire gênante. Pour ce faire, les enroulements sont soumis à des cycles de températures généralement comprises entre 110 et 150°C pendant des durées qui peuvent atteindre et dépasser 16 heures. En effet, la quantité d'eau à évaporer est importante car elle représente, en moyenne, au moins 10 à 15 % en poids de l'enroulement. Cette opération nécessite des installations particulières et une consommation d'énergie dont le coût grève les frais de production.

Par ailleurs, le séchage des enroulements peut parfois nuire à la qualité du fil lorsqu'il provoque une migration irrégulière des composants de l'ensimage à travers les spires desdits enroulement.

Afin de pallier ces inconvénients, il est connu de sécher directement le fil (US-A-3 853 605) ou les filaments (WO-92/05122) avant la formation de l'enroulement.

Le séchage des fils pendant l'opération de fibrage nécessite l'implantation de dispositifs tels que des fours au-dessous de chaque filière. Par ailleurs, l'efficacité de ce mode de séchage est étroitement liée aux conditions de fabrication telles que la quantité d'eau sur le fil, la composition de l'ensimage, la vitesse d'étirage, le nombre et le diamètre des filaments, etc...

Pour les rares cas d'ensimages composés uniquement de constituants organiques, les fils de verre revêtus de tels ensimages sont souvent soumis à un traitement particulier avant leur bobinage sur un support en rotation. Le but de ce traitement est de provoquer sur le fil, avant son bobinage, une modification de l'ensimage telle que ce dernier ne soit pas à l'origine d'un collage trop important des spires de l'enroulement entre elles, collage susceptible de rendre le dévidage du fil difficile sinon impossible. Ce traitement consiste, par exemple, à chauffer la nappe de filaments revêtus d'ensimage de manière à éliminer le solvant dudit ensimage avant la formation du fil par rassemblement desdits filaments (US-A-3 425 862), ou à polymériser l'ensimage en soumettant le fil, sur au moins une partie de son trajet, à l'action de radiations ultraviolettes (US-A-5 049 407). Là encore, ce genre de traitement nécessite l'implantation de dispositifs au-dessous de chaque filière et n'évite pas la recherche du meilleur compromis possible entre l'intégrité du fil et son aptitude à être mouillé par une matière organique.

Un fil intègre, revêtu d'un ensimage purement organique, peut être obtenu sans pour cela avoir été soumis à un traitement thermique ou autre ; c'est l'ensimage par lui-même qui assure la liaison des filaments entre eux. Le brevet US-A-4 530 860 décrit de tels ensimages, qui comprennent un pourcentage important d'agent filmogène dont le rôle essentiel est de conférer l'intégrité nécessaire à la manipulation du fil.

La présente invention a pour objet un procédé de fabrication d'un fil de verre revêtu d'un ensimage tel qu'il permet d'éviter l'opération de séchage et les inconvénients qui en résultent.

La présente invention a pour objet un procédé de fabrication d'un fil de verre revêtu d'un ensimage qui soit stable dans le temps et qui protège efficacement ledit fil de l'abrasion.

La présente invention a également pour objet un fil de verre facile à mettre en oeuvre aussi bien dans les opérations faisant appel à des techniques textiles que lors de la réalisation de produits composites.

Ces différents buts sont atteints par un procédé de fabrication d'un fil de verre selon lequel on étire mécaniquement une multiplicité de filaments continus à partir de filets e verre fondu qui s'écoulent d'une multiplicité d'orifices perforés à la base d'une filière, puis on rassemble lesdits filaments préalablement ensimés en un ou plusieurs fils que l'on collecte sur un support, et qui consiste à déposer sur lesdits filaments un ensimage constitué d'un mélange dont la teneur en solvant est nulle ou inférieure à 5 % en poids, ladite solution comprenant un mélange de composants polymérisables et/ou réticulables par traitement thermique, lesdits composants étant pour au moins 60 % en poids d'entre eux des composants dont la masse moléculaire est inférieure à environ 750, éventuellement moins de 10 % en poids d'agents filmogènes et de 0 à 25 % en poids d'agents de pontage, d'agents lubrifiants, d'agents stabilisants, d'amorceurs et/ou de catalyseurs de polymérisation par traitement thermique, lesdits agents et amorceurs étant éventuellement polymérisables et/ou réticulables par traitement thermique, puis à bobiner le ou les fils formés par rassemblement desdits filaments sur un support en rotation pour former un enroulement constitué de spires de fil revêtu d'en ensimage non polymérisé, ce procédé présentant les caractéristiques de la revendication 1.

Le mélange de composants polymérisables et/ou réticulables est formé, de préférence, pour au moins 60 % en poids d'entre eux, de composants dont la masse moléculaire est inférieure à environ 500.

Les composants formant au moins 60 % en poids du mélange sont, de préférence, des monomères. L'emploi d'un mélange de monomères, généralement assez réactifs, favorise le phénomène de polymérisation. Par ailleurs, l'emploi d'un mélange de monomères facilite le développement de la réticulation, ce qui confère une bonne stabilité au polymère obtenu.

L'ensimage déposé sur les filaments doit présenter une teneur minimale en composants polymérisables et/ou réticulables ; cette teneur est de préférence au moins égale à 70 % en poids. L'ensimage déposé sur les filaments dans le cadre du procédé selon l'invention comprend, généralement de 75 à 100 % en poids de composants polymérisables et/ou réticulables.

Dans la plupart des cas l'ensimage déposé sur les filaments est dénué de solvant. Il peut parfois en comprendre une faible quantité ; il s'agit alors de solvants organiques, parfois nécessaires à la mise en solution de certains composants polymérisables et/ou réticulables, ou de l'eau introduite la plupart du temps par le biais de constituants hydratés ou hydrolysés. La présence de ces solvants en quantité limitée ne requiert pas de traitements particuliers pour les éliminer.

L'ensimage déposé sur les filaments se caractérise également par la présence éventuelle, en faible quantité, d'agents filmogènes. La teneur de ces derniers, inférieure à 10 % du poids, est insuffisante pour leur faire jouer le rôle traditionnel d'agents de collage et conférer au fil une quelconque intégrité. Cette teneur est le plus souvent inférieure à 5% en poids. Par contre, en faible quantité, ils peuvent faciliter le fibrage pour certaines vitesses d'étirage et pour certains diamètres des filaments étirés. Ainsi, lorsque les filaments sont très fins et les vitesses d'étirage élevées, la présence d'agents filmogènes atténue le frottement des filaments sur le dispositif assurant le dépôt de l'ensimage. Les agents filmogènes utilisés dans le cadre de l'invention sont, de préférence, des dérivés des silicones et/ou des siloxanes.

L'ensimage déposé sur les filaments peut également comprendre des agents de pontage tels que des organo-silanes ; dans ce cas la teneur en silane dans l'ensimage peut atteindre 15 % en poids dudit ensimage. Ces agents de pontage ne sont pas indispensables dans le cadre de l'invention.

L'ensimage déposé sur les filaments peut aussi comprendre des agents lubrifiants ces agents sont introduits dans l'ensimage, notamment lorsque le fil ainsi ensimé est destiné à certaines applications textiles. Ces agents sont, de préférence, des esters gras ou des esters de glycol. Leur teneur pondérale n'excède pas 8 % ; au-delà de 8 % environ, lorsque le fil ensimé est en contact avec une matière organique, ces agents lubrifiants peuvent migrer dans ladite matière et risquent éventuellement de jouer alors un rôle de catalyseur d'oxydation ou d'hydrolyse. Ce phénomène se traduit par un vieillissement accéléré du matériau composite réalisé ou être à l'origine d'un défaut d'adhérence.

Selon la destination du fil obtenu selon l'invention, l'ensimage pourra éventuellement comprendre des amorceurs et/ou des catalyseurs de polymérisation par traitement thermique dans des proportions relativement importantes. Une forte teneur en amorceurs et/ou catalyseurs de polymérisation peut nuire à la stabilité de l'ensimage ; c'est la raison pour laquelle, en l'absence d'agents stabilisants qui jouent le rôle de retardateurs de polymérisation, cette teneur n'excède généralement pas 4 % en poids.

Comme indiqué précédemment, l'ensimage peut comprendre des agents stabilisants qui jouent le rôle de retardateurs de polymérisation. Ces agents sont introduits dans l'ensimage notamment lorsqu'il est nécessaire d'éviter que certains constituants réagissent spontanément entre eux pendant l'opération de fibrage. En général, leur teneur dans l'ensimage déposé sur les filaments n'excède pas 3 % en poids.

L'ensimage déposé sur les filaments se répartit très rapidement sur toute leur surface et forme un véritable film de protection pour chacun d'entre-eux. Au stade de l'enroulement qui vient d'être fabriqué, le fil qui le forme est constitué de filaments qui peuvent éventuellement glisser les uns sur les autres, s'écarter les uns des autres. Le fil obtenu selon l'invention ne présente pas une intégrité au sens ordinaire du terme, c'est-à-dire qu'il n'est pas constitué de filaments fixés entre eux grâce à une liaison par collage provoqué par un ou plusieurs constituants filmogènes de l'ensimage.

Malgré cette présentation, le fil selon l'invention est facilement extrait de son enroulement sans avoir recours à un traitement préalable susceptible d'assurer la polymérisation de l'ensimage, comme c'est le cas d'un fil revêtu d'un ensimage dont la teneur en agents filmogènes est relativement élevée. Cette absence d'intégrité du fil, au sens classique du terme, est importante dans la mesure où elle favorisera son imprégnation par la matière organique à laquelle il sera ultérieurement associé.

Toutefois, lorsque le fil doit être soumis à de fortes contraintes mécaniques au cours de sa mise en oeuvre, par exemple lors des opérations de tissage, il est préférable, au préalable, de faire polymériser l'ensimage qui le revêt. Ceci peut être obtenu en soumettant l'enroulement à un traitement thermique. Le fil présente alors une intégrité suffisante, au sens ordinaire du terme, pour supporter de telles contraintes.

Dans ce cas, l'ensimage utilisé comprend de préférence un amorceur et/ou catalyseur de polymérisation. La quantité d'ensimage déposée sur les filaments doit être telle, que le poids d'ensimage doit demeurer inférieur à environ 5 % du poids total de l'enroulement. En effet, au-delà de cette limite supérieure le collage des fils entre eux sur l'enroulement devient tel qu'il rend ce dernier inutilisable.

De plus, lorsque l'enroulement doit subir ultérieurement un traitement thermique, les spires de fil qui le constituent doivent présenter un angle de croisure au moins égal à 1,5°. Par angle de croisure il faut entendre l'angle qui existe entre les spires de fil appartenant à deux couches consécutives et dont la bissectrice est contenue dans un plan perpendiculaire à l'axe de l'enroulement.

En effet, lors de la phase initiale de ce traitement, I'élévation de température provoque une diminution temporaire de la viscosité de l'ensimage avant que les réactions de polymérisation n'interviennent. Si la croisure de l'enroulement est nulle ou faible, les spires de fil sont accolées ou tout au moins en contact sur une grande partie de leur longueur et l'ensimage à tendance à relier les spires adjacentes. A l'issue du traitement thermique les zones de collage entre les spires voisines sont importantes et l'enroulement est inutilisable. Lorsque l'angle de croisure du fil est d'au moins 1,5° les zones de collage sont considérablement réduites et n'empêchent pas l'extraction du fil.

Les fils de verre formant les enroulements réalisés selon la présente invention sont constitués de filaments continus dont le diamètre moyen peut varier entre 5 et 24 micromètres. Lorsque l'enroulement a subi un traitement thermique, le fil extrait dudit enroulement présente une perte au feu inférieure à 5 % en poids.
Afin de réduire la tension à laquelle sont soumis les filaments en cours d'étirage, il est choisi de déposer sur eux un ensimage qui soit à une viscosité inférieure ou égale à environ 400 centipoises. Une telle viscosité peut être atteinte notamment en sélectionnant les monomères entrant dans la composition de l'ensimage et/ou en dosant leur proportion par rapport à l'ensemble des composés polymérisables et/ou réticulables.

L'invention sera mieux comprise et ses avantages mieux appréciés grâce aux exemples suivants. Les fils de verre décrits ci-après sont formés par étirage mécanique de filets de verre fondu s'écoulant des orifices d'une filière selon une méthode bien connue de l'homme de l'art. Le verre utilisé est un alumino-borosilicate pratiquement dénué d'oxydes alcalins connu sous le nom de verre E.

Les filaments obtenus, de 14 micromètres de diamètre, sont revêtus d'un ensimage conforme à l'invention par l'intermédiaire d'un rouleau ensimeur de 40 millimètres de diamètre tournant à 110 tours par minute, la température de l'ensimage étant la température ambiante. Les fils obtenus par rassemblement desdits filaments sont bobinés sous la forme d'enroulements dont les angles de croisure varient entre 10 et 16°.

### EXEMPLE 1

Dans cet exemple, l'ensimage déposé sur les filaments présente la composition pondérale suivante :

| Composants de masse moléculaire inférieure à 750 (monomères) : | |
|---|---|
| • lauryl acrylate ⁽¹⁾ | 24 % |
| • ester diacrylate alkoxy aliphatique ⁽²⁾ | 21 % |
| • triméthylol propane triacrylate triéthoxylé ⁽³⁾ | 23 % |
| • bisphénol A acrylé epoxydé ⁽⁴⁾ | 20 % |

| Amorceur : | |
|---|---|
| • di-terbutyl péroxyde ⁽⁵⁾ | 2 % |

| Agent de pontage : | |
|---|---|
| • gamma-glycidoxy propyl triméthoxy silane ⁽⁶⁾ | 10 % |

Cet ensimage présente une viscosité de 48 cP. Les fils ensimés sont bobinés sous la forme d'enroulements pesant approximativement 13 kg. Ces enroulements sont soumis au traitement thermique suivant : 130°C pendant 5 heures puis, 140°C pendant 4 heures.

Les fils extraits de ces enroulements présentent un titre moyen de 332 tex, leur perte au feu s'élevant à 0,74 %.

La résistance à l'abrasion de ces fils a été évaluée en pesant la quantité de bourre formée après passage desdits fils sur une série de tiges. Exprimée en milligrammes de bourre par kilogramme de fil testé, la quantité moyenne de bourre a été de 57 mg.

### EXEMPLE 2

Dans cet exemple, l'ensimage déposé sur les filaments présente la composition pondérale suivante :

| Composants de masse moléculaire inférieure à 750 (monomères) : | |
|---|---|
| • tripropylène glycol diacrylate ⁽⁷⁾ | 25 % |
| • néopentyl glycol diacrylate dipropoxylé ⁽⁸⁾ | 21 % |
| • triméthylol propane triacrylate triéthoxylé ⁽³⁾ | 23 % |

| Composant de masse moléculaire supérieure à 750 : | |
|---|---|
| • résine époxy acrylate sur bisphénol A ⁽⁹⁾ | 13% |

| Amorceur: | |
|---|---|
| • peroxyde de terbutyle et de cumyle ⁽¹⁰⁾ | 2 % |

| Agent de pontage : | |
|---|---|
| • gamma-glycidoxy propyl triméthoxy silane ⁽⁶⁾ | 10% |

Cet ensimage présente une viscosité de 60 cP. Les fils ensimés sont bobinés sous la forme d'enroulements pesant approximativement 13 kg. Ces enroulements sont soumis à un traitement thermique de 140°C pendant 8 heures.

Les fils extraits de ces enroulements présentent un titre moyen de 325 tex, leur perte au feu s'élevant à 0,66 %.

Exprimée en milligrammes de bourre par kilogramme de fil testé, la quantité moyenne de bourre a été de 62 mg.

### EXEMPLE 3

Dans cet exemple, l'ensimage déposé sur les filaments présente la composition pondérale suivante :

| Composants de masse moléculaire inférieure à 750 (monomères) : | |
|---|---|
| • néopentyl glycol diacrylate dipropoxylé ⁽⁸⁾ | 31 % |
| • tripropylène glycol diacrylate ⁽⁷⁾ | 32 % |

| Composant de masse moléculaire supérieure à 750 : | |
|---|---|
| • oligomère acrylate de polyuréthane aromatique ⁽¹¹⁾ | 25 % |

| Amorceur : | |
|---|---|
| • peroxyde de terbutyle et de cumyle ⁽¹⁰⁾ | 2 % |

| Agent de pontage : | |
|---|---|
| • gamma-glycidoxy propyl triméthoxy silane ⁽⁶⁾ | 10 % |

Cet ensimage présente une viscosité de 78 cP. Les fils ensimés sont bobinés sous la forme d'enroulements pesant approximativement 13 kg. Ces enroulements sont soumis à un traitement thermique de 160°C pendant 8 heures.

Les fils extraits de ces enroulements présentent un titre moyen de 320 tex, leur perte au feu s'élevant à 0,54 %.

Exprimée en milligrammes de bourre par kilogramme de fil testé, la quantité moyenne de bourre a été de 41 mg.

### EXEMPLE 4

Dans cet exemple, l'ensimage déposé sur les filaments présente la composition pondérale suivante :

| Composants de masse moléculaire inférieure à 750 (monomères) : | |
|---|---|
| • ester triacrylate ⁽¹²⁾ | 28 % |
| • 2 (2-éthoxy éthoxy) éthyl acrylate ⁽¹³⁾ | 30 % |
| • hexanediol diacrylate ⁽¹⁴⁾ | 25 % |

| Agent de pontage : | |
|---|---|
| • gamma-glycidoxy propyl triméthoxy silane ⁽⁶⁾ | 12 % |

| Agent lubrifiant : | |
|---|---|
| • palmitate d'isopropyle | 5 % |

Les enroulements de fils ainsi ensimés ne sont pas soumis à un traitement thermique de polymérisation.

### EXEMPLE 5

Dans cet exemple, l'ensimage déposé sur les filaments présente la composition pondérale suivante :

| Composants de masse moléculaire inférieure à 750 (monomères) : | |
|---|---|
| • 2 (2-éthoxy éthoxy) éthylacrylate ⁽¹³⁾ | 21 % |
| • triéthyléne glycol divinyl éther ⁽¹⁵⁾ | 23 % |
| • triméthylol propane triacrylate éthoxylé ⁽³⁾ | 20 % |

| Composant de masse moléculaire supérieure à 750 : | |
|---|---|
| • résine acrylate sur base époxy aromatique ⁽¹⁶⁾ | 20 % |

| Amorceur : | |
|---|---|
| • peroxybenzoate de terbutyle ⁽¹⁷⁾ | 2% |

| Agent de pontage : | |
|---|---|
| • aminopropyltriéthoxysilane ⁽¹⁸⁾ | 10 % |

| Agent lubrifiant : | |
|---|---|
| • palmitate d'isopropyle | 4 % |

Cet ensimage présente une viscosité de 40 cP à 37°C.

### EXEMPLE 6

La composition pondérale de l'ensimage déposé sur les filaments est la suivante :

| Composants de masse moléculaire inférieure à 750 (monomères) : | |
|---|---|
| • 2 (2-éthoxy éthoxy) éthylacrylate ⁽¹³⁾ | 25 % |
| • triéthyléne glycol divinyl éther ⁽¹⁵⁾ | 29 % |
| • ester triacrylate ⁽¹²⁾ | 29 % |

| Amorceur : | |
|---|---|
| • peroxybenzoate de terbutyle ⁽¹⁷⁾ | 3 % |

| Agent de pontage : | |
|---|---|
| • aminopropyltriéthoxysilane ⁽¹⁸⁾ | 10 % |

| Agent lubrifiant : | |
|---|---|
| • palmitate d'isopropyle | 4 % |

Cet ensimage présente une viscosité de 24 cP à la température de 25°C.

Dans le cadre des exemples 5 et 6, des enroulements presque identiques ont été obtenus à l'issue d'un temps de bobinage de 20 minutes. Ces enroulements, qui présentent un angle de croisure moyen de 16°, ont ensuite été traités thermiquement, traitement au cours duquel ils ont été soumis à une température de 130°C pendant environ 180 minutes.

Des fils extraits d'un enroulement réalisé dans le cadre de l'exemple 5, présentent un titre moyen de 330 tex, leur perte au feu s'élevant à 0,75 %.

Des fils extraits d'un enroulement réalisé dans le cadre de l'exemple 6, présentent un titre moyen de 342 tex, leur perte au feu s'élevant à 0,70 %.

La résistance à l'abrasion des fils extraits de ces enroulements a été évaluée en pesant la quantité de bourre formée après passage desdits fils sur différentes séries de tiges. Exprimée en milligrammes de bourre par kilogramme de fil testé, la quantité moyenne de bourre pesée à l'issue de ces tests a varié pour ces deux types de fils entre 8 et 50 mg/kg. A titre de comparaison, un fil de référence présentant des caractéristiques similaires, mais revêtu d'un ensimage aqueux comprenant une émulsion de résine époxy, des silanes et des tensio-actifs cationiques et séchés dans des conditions ordinaires, a formé entre 200 et 500 mg de bourre par kg de fil.

A partir de ces mêmes fils, des plaques à fils parallèles ont été réalisées conformément à la norme NF 57152. La résine utilisée est la résine époxy CY205 commercialisée sous cette référence par la Société CIBA GEIGY.

Les propriétés mécaniques présentées par ces plaques, en flexion et en cisaillement, ont été mesurées respectivement selon les normes ISO 178 et ISO 4585. Ces propriétés ont été mesurées avant vieillissement et après immersion de ces plaques dans l'eau à 98°C pendant 72 heures. Ces propriétés, sont comparées ci-après à celles présentées par des plaques à fils parallèles réalisées à partir du même fil de référence que celui retenu pour le test de résistance à l'abrasion.

Les résultats obtenus, sur 8 à 10 éprouvettes pour chaque type de fil, rapportés à des plaques présentant des taux de verre en poids identiques, sont les suivants:

| | **Ex. 1** | **Ex. 2** | **Référence** |
|---|---|---|---|
| | | | |

| Contrainte à rupture en flexion (MPa) | | | |
|---|---|---|---|
| Avant vieillissement | 2376 | 2369 | 2280 |
| σ (MPa) | 75 | 50 | 40 |
| Après vieillissement | 1563 | 1635 | 1400 |
| σ (MPa) | 73 | 24 | 20 |

| Contrainte à rupture en cisaillement (MPa) | | | |
|---|---|---|---|
| Avant vieillissement | 64,0 | 67,2 | 69,5 |
| σ (MPa) | 1,4 | 0,8 | 1,0 |
| Après vieillissement | 32,2 | 43,3 | 40,0 |
| σ (MPa) | 1,0 | 1,2 | 0,4 |

Ces résultats montrent que des pièces composites réalisées à partir des fils obtenus selon l'invention présentent des propriétés aussi bonnes et, pour au moins une d'entre elles, meilleures que celles des pièces fabriquées à partir de fils classiques.

Les fils selon l'invention sont particulièrement recommandés pour toutes les applications textiles, mais leur principal emploi reste le renforcement de différentes matières en vue de réaliser des produits composites. Ces matières peuvent être minérales, telles que des mélanges à base de ciment, ou organiques.

### Références :

**(1)** Commercialisé sous la référence 〈〈 SR 335 〉〉 par la société CRAY-VALLEY
**(2)** Commercialisé sous la référence 〈〈 SR 9209 〉〉 par la société CRAY-VALLEY
**(3)** commercialisé sous la référence 〈〈 SR 454 〉〉 par la société CRAY-VALLEY
**(4)** Commercialisé sous la référence 〈〈 Ebécryl 3605 〉〉 par la société UNION CHIMIQUE BELGE
**(5)** Commercialisé sous la référence 〈〈 Trigonox B 〉〉 par la société AKZO
**(6)** Commercialisé sous la référence 〈〈 Silane A 187 〉〉 par la société OSI SPECIALITIES S.A.
**(7)** Commercialisé sous la référence 〈〈 TPGDA 〉〉 par la société UNION CHIMIQUE BELGE
**(8)** Commercialisé sous la référence 〈〈 SR 9003 〉〉 par la société CRAY-VALLEY
**(9)** Commercialisée sous la référence 〈〈 CN 104 〉〉 par la société CRAY-VALLEY
**(10)** Commercialisé sous la référence 〈〈 Trigonox T 〉〉 par la société AKSO
**(11)** Commercialisé sous la référence 〈〈 Actilane 17 〉〉 par la société AKCROS
**(12)** Commercialisé sous la référence 〈〈 Photomer 4171 〉〉 par la société AKCROS
**(13)** Commercialisé sous la référence 〈〈 SR 256 〉〉 par la société CRAY-VALLEY
**(14)** Commercialisé sous la référence 〈〈 HDDA 〉〉 par la société UNION CHIMIQUE BELGE
**(15)** Commercialisé sous la référence 〈〈 DVE 3 〉〉 par la société INTERNATIONAL SPECIALITY PRODUCTS
**(16)** Commercialisée sous la référence 〈〈 Photomer 3016 〉〉 par la société AKCROS
**(17)** Commercialisé sous la référence 〈〈 Trigonox C 〉〉 par la société AKSO
**(18)** Commercialisé sous la référence 〈〈 Silane A 1100 〉〉 par la société OSI SPECIALITIES S.A.

## Revendications

1. Procédé de fabrication de fils de verre consistant à étirer mécaniquement une multiplicité de filaments continus à partir de filets de verre fondu qui s'écoulent d'une multiplicité d'orifices perforés à la base d'une filière, puis à rassembler lesdits filaments préalablement ensimés en un ou plusieurs fils que l'on collecte sur un support selon lequel on dépose à la surface des filaments en cours d'étirage un ensimage constitué d'un mélange dont la teneur en solvant est nulle ou inférieure à 5 % en poids, ladite solution comprenant un mélange de composants polymérisables et/ou réticulables par traitement thermique, lesdits composants étant pour au moins 60 % en poids d'entre eux des composants dont la masse moléculaire est inférieure à 750, éventuellement moins de 10 % en poids d'agents filmogènes et de 0 à 25 % en poids d'agents de pontage, d'agents lubrifiants, d'agents stabilisants et d'amorceurs et/ou catalyseurs de polymérisation par traitement thermique, lesdits agents et amorceurs étant éventuellement polymérisables et/ou réticulables par traitement thermique, ladite solution présentant une viscosité égale ou inférieure à environ 400 centipoises, puis on bobine le ou les fils, formés par rassemblement desdits filaments, sur un support en rotation pour former un enroulement constitué de spires de fil revêtu d'un ensimage non polymérisé, la quantité d'ensimage déposée étant inférieure à 5 % en poids du poids total de l'enroulement.

2. Procédé selon la revendication 1, **caractérisé en ce que** le mélange de composants polymérisables et/ou réticulables est formé, pour au moins 60 % en poids d'entre eux, de composants dont la masse moléculaire est inférieure à environ 500.

3. Procédé selon l'une des revendications 1 et 2, **caractérisé en ce que** les composants formant au moins 60 % en poids du mélange sont des monomères.

4. Procédé selon l'une des revendications précédentes, **caractérisé en ce** qu'on dépose sur les filaments un ensimage qui comprend au moins 70 % en poids de composants polymérisables et/ou réticulables.

5. Procédé selon l'une des revendications précédentes, ***caractérisé en ce que*** l'ensimage déposé sur les filaments comprend entre 75 et 100% en poids de composants polymérisables et/ou réticulables.

6. Procédé selon l'une des revendications précédentes, ***caractérisé en ce qu'***on dépose sur les filaments un ensimage dénué de solvant.

7. Procédé selon l'une des revendications précédentes, ***caractérisé en ce que*** l'ensimage déposé sur les filaments peut comprendre jusqu'à 5% en poids d'agents filmogènes choisis parmi les dérivés des silicones et/ou des siloxanes.

8. Procédé selon l'une quelconque des revendications précédentes, ***caractérisé en ce que*** l'ensimage déposé sur les filaments peut comprendre jusqu'à 15% en poids d'agents de pontage sous la forme d'organosilanes.

9. Procédé selon l'une quelconque des revendications précédentes, ***caractérisé en ce que*** l'ensimage déposé sur les filaments peut comprendre jusqu'à 8% en poids d'agents lubrifiants tels que des esters gras ou des esters de glycol.

10. Procédé selon l'une quelconque des revendications précédentes, ***caractérisé en ce que*** l'ensimage déposé sur les filaments peut comprendre jusqu'à 4% en poids d'amorceurs et/ou catalyseurs de polymérisation.

11. Procédé selon l'une quelconque des revendications précédentes, ***caractérisé en ce que*** l'ensimage déposé sur les filaments peut comprendre jusqu'à 3% en poids d'agents stabilisants.

12. Procédé selon l'une quelconque des revendications précédentes, ***caractérisé en ce que*** l'enroulement est réalisé en observant un angle de croisure au moins égal à 1,5°.

13. Procédé selon la revendication 12, ***caractérisé en ce qu'*** on soumet l'enroulement ainsi réalisé à l'action d'un traitement thermique de manière à provoquer la polymérisation de l'ensimage.

14. Enroulement réalisé selon l'une des revendications 1 à 13, ***caractérisé en ce qu'***il est formé de spires de fil de verre dont la perte au feu est inférieure à 5% en poids.

15. Enroulement selon la revendication 14, ***caractérisé en ce qu'***il est forme de spires de fil de verre revêtu d'un ensimage polymérisé.

16. Enroulement selon l'une quelconque des revendications 14 et 15, ***caractérisé en ce qu'***il est formé de spires de fil de verre constitué de filaments dont le diamètre moyen est compris entre 5 et 24 micromètres.

## Claims

1. Process for manufacturing glass fibres consisting in mechanically drawing a large number of continuous filaments from thin streams of molten glass flowing from a large number of apertures provided in the base of a die plate, then in collecting the previously sized filaments to form one or more fibres which is/are collected on a support, according to which process there is deposited on the surface of the filaments in the process of being drawn a size consisting of a mixture of which the solvent content is zero or less than 5 weight %, the solution comprising a mixture of constituents which can be polymerized and/or crosslinked by heat treatment, at least 60 weight % of the constituents being constituents of which the molecular weight is less than 750, possibly less than 10 weight % being film-forming agents and 0 to 25 weight % being coupling agents, lubricants, stabilizers and initiators and/or catalysts for polymerization by heat treatment, it being possible if necessary for the agents and initiators to be polymerized and/or crosslinked by heat treatment, the viscosity of said solution being equal to or less than approximately 400 cP, the process then consisting in winding the fibre or fibres, formed by the collection of the filaments, on a rotating support so as to form a wound package consisting of turns of fibre coated with a non-polymerized size, the amount of size deposited being less than 5 weight % of the total weight of the wound package.

2. Process according to Claim 1, characterized in that at least 60 weight % of the mixture of constituents which can be polymerized and/or crosslinked is formed of constituents of which the molecular weight is less than approximately 500.

3. Process according to either of Claims 1 and 2, characterized in that the constituents forming at least 60 weight % of the mixture are monomers.

4. Process according to any one of the preceding claims, characterized in that a size comprising at least 70 weight % of constituents which can be polymerized and/or crosslinked is deposited on the filaments.

5. Process according to any one of the preceding claims, characterized in that the size deposited on the filaments comprises between 75 and 100 weight % of constituents which can be polymerized and/or crosslinked.

6. Process according to any one of the preceding claims, characterized in that a size depleted of solvent is deposited on the filaments.

7. Process according to any one of the preceding claims, characterized in that the size deposited on the filaments can comprise up to 5 weight % of film-forming agents selected from the derivatives of silicones and/or siloxanes.

8. Process according to any one of the preceding claims, characterized in that the size deposited on the filaments can comprise up to 15 weight % of coupling agents in the form of organosilanes.

9. Process according to any one of the preceding claims, characterized in that the size deposited on the filaments can comprise up to 8 weight % of lubricants such as fatty esters or glycol esters.

10. Process according to any one of the preceding claims, characterized in that the size deposited on the filaments can comprise up to 4 weight % of polymerization catalysts and/or initiators.

11. Process according to any one of the preceding claims, characterized in that the size deposited on the filaments can comprise up to 3 weight % of stabilizers.

12. Process according to any one of the preceding claims, characterized in that the wound package is formed by observing an angle of intersection of at least 1.5°.

13. Process according to Claim 12, characterized in that the wound package thus produced is subjected to a heat treatment so as to cause the size to polymerize.

14. Wound package produced according to any one of Claims 1 to 13, characterized in that it is formed of turns of glass fibre of which the melting loss is less than 5 weight %.

15. Wound package according to Claim 14, characterized in that it is formed of turns of glass fibre coated with a polymerized size.

16. Wound package according to either of Claims 14 and 15, characterized in that it is formed of turns of glass fibre consisting of filaments of which the average diameter is between 5 and 24 µm.

## Patentansprüche

1. Verfahren zur Herstellung von Glasfäden, welches darin besteht, eine Vielzahl endloser Filamente aus geschmolzenen Glasstrahlen, die aus einer Vielzahl von Öffnungen fließen, die im Boden einer Spinndüse angebracht sind, mechanisch zu ziehen und anschließend die zuvor mit einer Schlichte überzogenen Filamente zu einem oder mehreren Fäden zu vereinigen, der/die auf einem Träger zusammengefaßt wird/werden, gemäß welchem auf der Oberfläche der Filamente während des Ziehvorgangs eine Schlichte aufgebracht wird, die aus einem Gemisch besteht, dessen Lösungsmittelgehalt gleich Null oder kleiner als 5 Gew.-% ist, wobei diese Lösung ein Gemisch von Komponenten, die durch Wärmebehandlung polymerisierbar und/oder vernetzbar sind, wovon mindestens 60 Gew.-% Komponenten sind, deren Molmasse kleiner als 750 ist, gegebenenfalls weniger als 10 Gew.-% filmbildende Mittel, 0 bis 25 Gew.-% Haft-, Gleit- und Stabilisierungsmittel und Starter und/oder Katalysatoren der Polymerisation durch Wärmebehandlung enthält, wobei diese Mittel und Starter gegebenenfalls durch Wärmebehandlung polymerisierbar und/oder vernetzbar sind und die Lösung eine Viskosität von gleich oder niedriger als etwa 400 cP besitzt, und danach der/die durch Vereinigung der Filamente geformte/n Faden/Fäden auf einem sich drehenden Träger aufgewickelt wird/werden, um eine Spule zu bilden, die aus Windungen eines Fadens besteht, der mit einer unpolymerisierten Schlichte überzogen ist, wobei die Menge der aufgebrachten Schlichte weniger als 5 Gew.-% des Gesamtgewichts der Spule ausmacht.

2. Verfahren nach Anspruch 1, **dadurch gekennzeichnet, daß** das Gemisch polymerisierbarer und/oder vernetzbarer Komponenten zu mindestens 60 Gew.-% von Komponenten gebildet wird, deren Molmasse kleiner als etwa 500 ist.

3. Verfahren nach Anspruch 1 oder 2, **dadurch gekennzeichnet, daß** die mindestens 60 Gew.-% des Gemischs ausmachenden Komponenten Monomere sind.

4. Verfahren nach einem der vorhergehenden Ansprüche, **dadurch gekennzeichnet, daß** auf den Filamenten eine Schlichte aufgebracht wird, die mindestens 70 Gew.-% polymerisierbare und/oder vernetzbare Komponenten enthält.

5. Verfahren nach einem der vorhergehenden Ansprüche, **dadurch gekennzeichnet, daß** die auf den Filamenten aufgebrachte Schlichte 75 bis 100 Gew.-% polymerisierbare und/oder vernetzbare Komponenten enthält.

6. Verfahren nach einem der vorhergehenden Ansprüche, **dadurch gekennzeichnet, daß** auf den Filamenten eine lösungsmittelfreie Schlichte aufgebracht wird.

7. Verfahren nach einem der vorhergehenden Ansprüche, **dadurch gekennzeichnet, daß** die auf den Filamenten aufgebrachte Schlichte bis zu 5 Gew.-% filmbildende Mittel enthalten kann, die aus Silicon- und/oder Siloxanderivaten ausgewählt sind.

8. Verfahren nach einem der vorhergehenden Ansprüche, **dadurch gekennzeichnet, daß** die auf den Filamenten aufgebrachte Schlichte bis zu 15 Gew.-% Haftmittel in Form von Organosilanen enthalten kann.

9. Verfahren nach einem der vorhergehenden Ansprüche**, dadurch gekennzeichnet, daß** die auf den Filamenten aufgebrachte Schlichte bis zu 8 Gew.-% Gleitmittel wie Fettsäureester oder Glykolester enthalten kann.

10. Verfahren nach einem der vorhergehenden Ansprüche, **dadurch gekennzeichnet, daß** die auf den Filamenten aufgebrachte Schlichte bis zu 4 Gew.-% Polymerisationsstarter und/oder -katalysator enthalten kann.

11. Verfahren nach einem der vorhergehenden Ansprüche, **dadurch gekennzeichnet, daß** die auf den Filamenten aufgebrachte Schlichte bis zu 3 Gew.-% Stabilisierungsmittel enthalten kann.

12. Verfahren nach einem der vorhergehenden Ansprüche, **dadurch gekennzeichnet, daß** die Spule hergestellt wird, indem man einen Kreuzungswinkel von mindestens 1,5° einhält.

13. Verfahren nach Anspruch 12, **dadurch gekennzeichnet, daß** die so erhaltene Spule derart einer Wärmebehandlung unterzogen wird, daß die Polymerisation der Schlichte einsetzt.

14. Spule, hergestellt gemäß einem der Ansprüche 1 bis 13, **dadurch gekennzeichnet, daß** sie von Windungen eines Glasfadens gebildet wird, dessen Glühverlust weniger als 5 Gew.-% beträgt.

15. Spule nach Anspruch 14, **dadurch gekennzeichnet, daß** sie von Windungen eines Glasfadens gebildet wird, der mit einer polymerisierten Schlichte überzogen ist.

16. Spule nach Anspruch 14 oder 15, **dadurch gekennzeichnet, daß** sie von Windungen eines Glasfadens gebildet wird, der aus Filamenten besteht, deren mittlerer Durchmesser zwischen 5 und 24 Mikrometern liegt.
